(19) Europäisches Patentamt
European Patent Office
Office européen des brevets

(11) **EP 2 040 387 A1**

(12) **EUROPEAN PATENT APPLICATION**

(43) Date of publication:
**25.03.2009 Bulletin 2009/13**

(51) Int Cl.:
***H04B 1/707*** (2006.01)

(21) Application number: **08016567.3**

(22) Date of filing: **19.09.2008**

| | |
|---|---|
| (84) Designated Contracting States: **AT BE BG CH CY CZ DE DK EE ES FI FR GB GR HR HU IE IS IT LI LT LU LV MC MT NL NO PL PT RO SE SI SK TR** Designated Extension States: **AL BA MK RS** | (72) Inventor: **Kim, Hyun-Cheol** **Suwon-si** **Gyeonggi-do (KR)** |
| (30) Priority: **19.09.2007 KR 20070095076** | (74) Representative: **Grünecker, Kinkeldey,** **Stockmair & Schwanhäusser** **Anwaltssozietät** **Leopoldstrasse 4** **80802 München (DE)** |
| (71) Applicant: **Samsung Electronics Co., Ltd.** **Suwon-si** **Gyeonggi-do 443-742 (KR)** | |

(54) **Tracking apparatus and method in mobile terminal**

(57)    A tracking apparatus and method in a mobile terminal are provided. The method includes extracting an on-time energy signal, an early energy signal, and a late energy signal from a received signal, estimating respective ICI components from the early energy signal and the late energy signal, measuring an early energy and a late energy by using the early energy signal and the late energy signal, and removing ICI by subtracting the estimated ICI components respective from the measured early energy and late energy.

FIG.2

**Description**

## BACKGROUND OF THE INVENTION

1. Field of the Invention:

The present invention relates to a tracking apparatus and method in a mobile terminal. More particularly, the present invention relates to a tracking apparatus and method in which Inter-Chip Interference (ICI) is substantially removed when tracking is performed in a mobile terminal.

2. Description of the Related Art:

A mobile communication system includes a mobile terminal which receives a signal. To obtain synchronization of the received signal, the mobile terminal performs tracking. More specifically, when a signal is received and processed by the mobile terminal, it is preferable to receive a signal having a high power level because a higher power level allows for better signal processing. Thus, when a mobile terminal or User Equipment (UE) performs the signal processing, the most effective way is to receive and process a signal at a point where a power level of the signal is highest. In general, the signal received by the mobile terminal has a structure in which power levels are bilaterally symmetrical about a highest power point. Therefore, the point having the highest power level of the signal needs to be extractable by the UE. A process of extracting the point having the highest power level from the signal is referred to as tracking.

In general, tracking can be achieved using a bilaterally symmetric feature of signals. That is, since signal power levels are bilaterally symmetrical about a highest power point, power levels at two points equidistantly separated from the highest power point are the equal to each other. Such a characteristic is used in tracking, which will be described in more detail below.

First, an arbitrary point is extracted from a received signal and is determined as a candidate for the point having the highest power level. Two points equidistantly separated from the candidate point are extracted. Then, power levels of the two points are compared with each other. If the power levels of the two points are equal to each other, the candidate point is determined as the point having the highest power level. Otherwise, if the power levels of the two points are not equal to each other, the candidate point is changed to a position at which the power levels of the two points become equal to each other. In this manner, the point having the highest power level can be extracted.

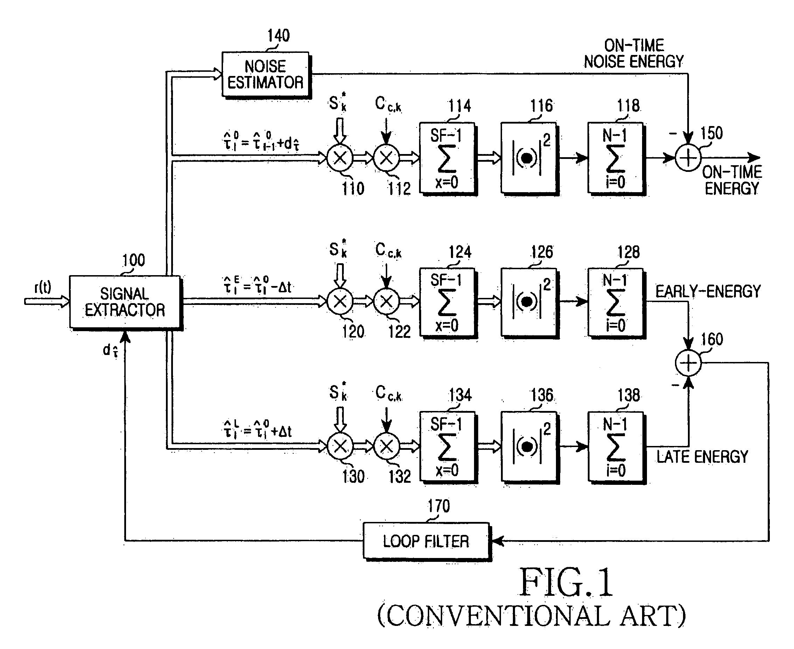

FIG. 1 illustrates a structure of a conventional tracking apparatus of a mobile terminal.

Referring to FIG. 1, the conventional tracking apparatus includes a signal extractor 100, descramblers 110, 120, and 130, dechannelizers 112, 122, and 132, despreaders 114, 124, and 134, energy calculators 116, 126, and 136, interval energy calculators 118, 128, and 138, a noise estimator 140, a noise remover 150, an adder 160, and a loop filter 170. The signal extractor 100 generates an on-time energy signal, an early energy signal, and a late energy signal from a received signal. The descramblers 110, 120, and 130 respectively descramble the on-time energy signal, the early energy signal, and the late energy signal to convert the signals into unscrambled signals. The dechannelizers 112, 122, and 132 convert the respective descrambled signals into unchannelized signals. The despreaders 114, 124, and 134 despread the respective dechannelized signals to convert the signals into unspread signals. The energy calculators 116, 126, and 136 calculate power levels of the respective despread signals. The interval energy calculators 118, 128, and 138 calculate energies during specific intervals. The noise remover 150 removes a noise energy estimated by the noise estimator 140 according to an on-time energy measured during a specific interval. The adder 160 adds an early energy and a late energy which are measured during a specific interval. The loop filter 170 is a feedback circuit.

The signal extractor 100 can be constructed of an interpolator and a decimator. The interpolator is used to convert the received signal into a signal with a required rate. The decimator is used to extract the on-time energy signal, the early energy signal, and the late energy signal.

In FIG. 1, an In-phase (I) channel and a Quadrature (Q) channel both exist in a portion indicated by a wide arrow mark. According to the conventional tracking apparatus, the received signal is converted into a signal with the required rate by the interpolator of the signal extractor 100. The converted signal is regulated using a path delay for the on-time energy according to $d\hat{\tau}$. Thereafter, the regulated signal is processed by the decimator to generate the on-time energy signal, the early energy signal, and the late energy signal.

In FIG. 1, $\hat{\tau}_l^0$ denotes an estimation position of the on-time energy signal. $\hat{\tau}_l^E$ denotes an estimation position of the early energy signal. $\hat{\tau}_l^L$ denotes an estimation position of the late energy signal. $\Delta t$ denotes a time offset for the early energy and the late energy. In general, $\Delta t$ has a value of $T_c/2$, where $T_c$ denotes a chip interval.

The three signals generated in the signal extractor 100 are converted through the descramblers 110, 120, and 130, the dechannelizers 112, 122, and 132, and the despreaders 114, 124, and 134, respectively.

The energy calculators 116, 126, and 136 calculate energies of the despread on-time energy signal, early energy signal, and late energy signal. The energy calculators 116, 126, and 136 calculate the energies by squaring and then adding I channel and Q channel signals of the despread signals. The interval energy calculators 118, 128, and 138 obtain energies for N intervals by adding N energy values calculated by the energy calculators 116, 126, and 136, respectively.

Meanwhile, the on-time energy for the N intervals includes noise energy. Therefore, to generate pure on-time energy, the noise energy is subtracted from the on-time energy output from the interval energy calculator 118. The subtraction operation is performed in the noise remover 150.

The early energy and the late energy output from the interval energy calculators 128 and 138 are converted into values to be used in tracking through the subtraction operation of the adder 160. A difference between the early energy and the late energy is formed into a processed value through the loop filter 170. The resultant processed value is compared with a preset threshold to determine $\hat{d\tau}$, and then is passed to the decimator. To be robust to a rapid channel change, the difference between the early energy and the late energy can be used by dividing the difference by the pure on-time energy.

When the early energy and the late energy are obtained using the conventional technique, tracking is performed using the difference between the early energy and the late energy under the assumption that all signal components are substantially identical except for the pure energy. However, a noise component and an Inter-Chip Interference (ICI) component exit in a signal whose energy is not the pure energy. Therefore, a problem may occur in which, when the ICI is significantly large, tracking is not properly performed since the ICI results in the generation of the difference between the early energy and the late energy.

## SUMMARY OF THE INVENTION

An aspect of the present invention is to address at least the above-mentioned problems and/or disadvantages and to provide at least the advantages described below. Accordingly, an aspect of the present invention is to provide a tracking apparatus and method in a mobile terminal.

Another aspect of the present invention is to provide a tacking apparatus and method in which Inter-Chip Interference (ICI) is removed when tracking is performed in a mobile terminal.

Another aspect of the present invention is to provide a tracking apparatus and method for increasing a tracking accuracy by removing ICI from an early energy and a late energy which are extracted from a received signal in a mobile terminal.

In accordance with an aspect of the present invention, a tracking apparatus in a mobile terminal is provided. The apparatus includes a signal extractor for extracting an on-time energy signal, an early energy signal, and a late energy signal from a received signal, a first ICI estimator for estimating an early energy ICI component from the early energy signal, a second ICI estimator for estimating a late energy ICI component from the late energy signal, an early energy measurer for measuring an early energy by using the early energy signal, a late energy measurer for measuring a late energy by using the late energy signal, a first ICI remover for removing ICI by subtracting the estimated early energy ICI component from the early energy measured by the early energy measurer, and a second ICI remover for removing ICI by subtracting the estimated late energy ICI component from the late energy measured by the late energy measurer.

In accordance with another aspect of the present invention, a tracking method in a mobile terminal is provided. The method includes extracting an on-time energy signal, an early energy signal, and a late energy signal from a received signal, estimating respective ICI components from the early energy signal and the late energy signal, measuring an early energy and a late energy by using the early energy signal and the late energy signal, and removing ICI by subtracting the estimated ICI components respective from the measured early energy and late energy.

Other aspects, advantages, and salient features of the invention will become apparent to those skilled in the art from the following detailed description, which, taken in conjunction with the annexed drawings, discloses exemplary embodiments of the invention.

## BRIEF DESCRIPTION OF THE DRAWINGS

The above and other aspects, features and advantages of certain exemplary embodiments of the present invention will be more apparent from the following detailed description taken in conjunction with the accompanying drawings, in which:

FIG. 1 illustrates a structure of a conventional tracking apparatus of a mobile terminal;

FIG. 2 illustrates a structure of a tracking apparatus for removing Inter-Chip Interference (ICI) according to an exemplary embodiment of the present invention; and

FIG. 3 is a flowchart illustrating a tracking process in which ICI is removed by a tracking apparatus of a mobile terminal according to an exemplary embodiment of the present invention.

Throughout the drawings, it should be noted that like reference numbers are used to depict the same or similar elements, features and structures.

## DETAILED DESCRIPTION OF EXEMPLARY EMBODIMENTS

The following description with reference to the accompanying drawings is provided to assist in a comprehensive understanding of exemplary embodiments of the present invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions or constructions are omitted for clarity and conciseness.

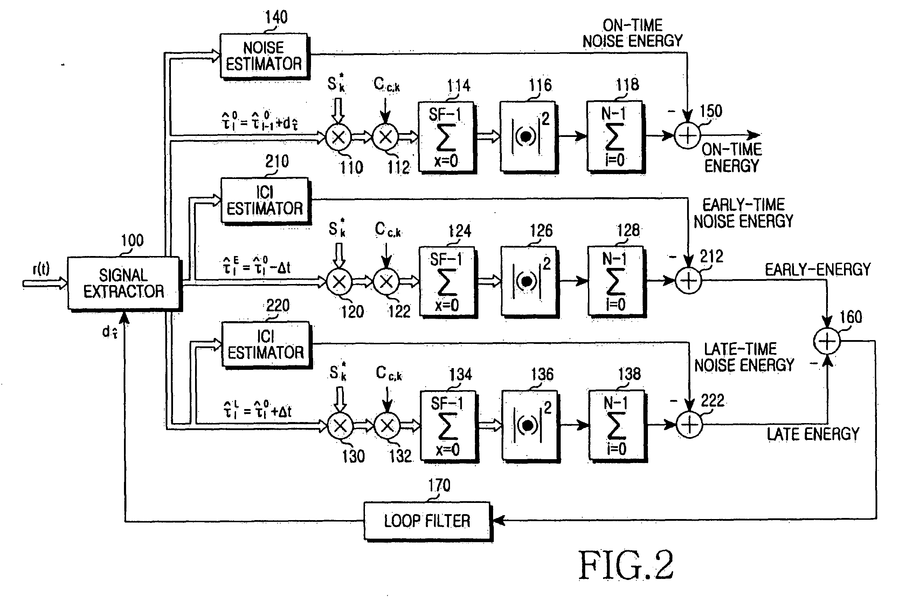

The present invention relates to a tracking apparatus and method for increasing a tracking accuracy by removing Inter-Chip Interference (ICI) from an early energy and a late energy which are extracted from a received signal in a mobile terminal. The apparatus thereof will be described below with reference to FIG. 2.

FIG. 2 illustrates a structure of a tracking apparatus for removing ICI according to an exemplary embodiment of the present invention.

Referring to FIG. 2, the tracking apparatus includes a signal extractor 100, descramblers 110, 120, and 130, dechannelizers 112, 122, and 132, despreaders 114, 124, and 134, energy calculators 116, 126, and 136, interval energy calculators 118, 128, and 138, a noise estimator 140, a noise remover 150, an adder 160, a loop filter 170, ICI estimators 210 and 220, and ICI removers 212 and 222.

As for constitutional elements of the tracking apparatus of an exemplary embodiment of the present invention, the elements performing the same operation as those of the conventional tracking apparatus are indicated by like reference numerals. Detailed descriptions thereof will be omitted since they are disclosed in the "background of the invention" section.

The ICI estimators 210 and 220 estimate respective ICI components of an early energy signal and a late energy signal received from the signal extractor 100.

The ICI removers 212 and 222 remove the ICI components estimated by the ICI estimators 210 and 220 respectively from an early energy and a late energy which are received from the interval energy calculators 128 and 138. Then, the ICI removers 212 and 222 provide the ICI-removed signals to the adder 160.

The early energy and the late energy, each of which has the ICI component removed through the ICI removers 212 and 222, undergo a subtraction operation of the adder 160, and are then formed into values to be used for tracking.

An ICI removing process in the tracking apparatus of an exemplary embodiment of the present invention, described above with reference to FIG. 2, will now be described with reference to the following Equations.

When a signal is transmitted from a Code Division Multiple Access (CDMA) system in which a transmitter and a receiver use a pulse shaping filter, the signal can be expressed by Equation (1) below.

$$b(t) = \sqrt{M} \sum_k d_k g(t - kT_c) \qquad \text{--- (1)}$$

In Equation (1), the variable $d_k$ denotes a chip to be transmitted and is a complex value. The function $g(t)$ denotes a pulse shaping filter. In general, a square root raised cosine filter is used as the pulse shaping filter. The variable M denotes a transmitted signal power. For convenience, equations are derived under the assumption that a control signal is transmitted on a Quadrature (Q) channel, and a data signal is transmitted on an In-phase (I) channel. In general, when large-sized data is transmitted, the data can be transmitted on several data channels by changing the I/Q channel or a channelization code. In Equation (1), the variable $d_k$ can be expressed by Equation (2) below.

$$d_k = (\beta_d S_d(n) c_{d,k} + j\beta_c S_c(i) c_{c,k}) s_k \qquad \text{--- (2)}$$

In Equation (2), the variable $s_k$ denotes a scrambling sequence, and is a complex value. The function $s_d(n)$ denotes data information to be transmitted, and is a value that changes in a spreading factor unit of the data information.

The function $s_c(i)$ denotes control information to be transmitted and is a value that changes in a spreading factor unit of the control information. The control information includes data such as a pilot required for data transmission. The variables $c_{d,k}$ and $c_{c,k}$ denote channelization sequences and have orthogonality with each other. The variables $\beta_d$ and $\beta_c$ denote gain factors and determine a ratio of power used to transmit the data information and the control information.

When a signal passes up to the pulse shaping filter of the receiver via a fading channel along an $m^{th}$ path having a delay of $\tau_m$, the signal can be expressed by Equation (3) below.

$$
\begin{aligned}
r_m(t) &= (a_m(t)b(t-\tau_m)+n_m(t))*g(t) \\
&= \sqrt{M}\, a_m(t)\sum_k \{d_k g(t-\tau_m-kT_c)\}*g(t)+n_m(t)*g(t) \\
&= \sqrt{M}\, a_m(t)\sum_k \{d_k G(t-\tau_m-kT_c)\}+n_{m.r}(t)
\end{aligned}
\qquad \text{--- (3)}
$$

In Equation (3), the function $a_m(t)$ can be expressed by Equation (4) below.

$$
a_m(t) = A_m(t)\{\cos(\theta_m(t))+j\sin(\theta_m(t))\}
\qquad \text{---(4)}
$$

In Equation (4), the function $A_m(t)$ denotes an amplitude variation over time. The function $\theta_m(t)$ denotes a phase variation. In Equation (3), the function $n_m(t)$ includes a thermal noise and a noise resulted from a multi-path environment and other User Equipments (UEs). The function $G(t)$ can be expressed by Equation (5) below.

$$
G(t) = g(t)*g(t) = \int_{-\infty}^{\infty} g(\tau)g(t-\tau)d\tau
\qquad \text{--- (5)}
$$

The function $n_{m,r}(t)$ denotes a filtered noise and has a Gaussian distribution.

A signal obtained after performing $m^{th}$ path despreading by using Equation (3) above can be expressed by Equation (6) below.

$$
\begin{aligned}
DesSig_m(i,\Delta) &= \sum_{n=0}^{SF-1} r_m((n+i\cdot SF)T_c+\tau_m+\Delta)s^{\bullet}_{n+i\cdot SF}c_{c,n} \\
&= \sqrt{M}\sum_{n=0}^{SF-1}\{a_m((n+i\cdot SF)T_c+\tau_m+\Delta)\sum_k d_k G((n+i\cdot SF)T_c+\Delta-kT_c))\}s^{\bullet}_{n+i\cdot SF}c_{c,n}\} \\
&\quad + \sum_{n=0}^{SF-1}\{n_{m,r}((n+i\cdot SF)T_c+\tau_m+\Delta)s^{\bullet}_{n+i\cdot SF}c_{c,n}\} \\
&= \sqrt{M}\cdot G(\Delta)\sum_{n=0}^{SF-1}\{a_m((n+i\cdot SF)T_c+\tau_m+\Delta)d_{n+i\cdot SF}s^{\bullet}_{n+i\cdot SF}c_{c,n}\} \\
&\quad + \sqrt{M}\sum_{n=0}^{SF-1}\{a_m((n+i\cdot SF)T_c+\tau_m+\Delta)\sum_{k\neq n+i\cdot SF}d_k G((n+i\cdot SF)T_c+\Delta-kT_c))\}s^{\bullet}_{n+i\cdot SF}c_{c,n}\}+n_{m.i}(i,\Delta) \\
&= \sqrt{M}\cdot G(\Delta)\sum_{n=0}^{SF-1}\{a_m((n+i\cdot SF)T_c+\tau_m+\Delta)d_{n+i\cdot SF}s^{\bullet}_{n+i\cdot SF}c_{c,n}\}+ICI_m(i,\Delta)+n_{m.i}(i,\Delta)
\end{aligned}
\qquad \text{--- (6)}
$$

In Equation (6), SF denotes a spreading factor of control information. The variable i denotes an index indicating an $i^{th}$ symbol of the control information. The variable $\Delta$ denotes a relative offset at an original position of an $m^{th}$ path. The function $n_{m,t}(i,\Delta)$ includes a thermal noise and a noise resulted from a multi-path environment and other UEs. The function $n_{m,t}(i,\Delta)$ also has a Gaussian distribution. If it is assumed in Equation (6) that a channel variation in one symbol (during an interval corresponding to a spreading factor) can be ignored, that is, $a_m(t) \cong a_m(i)$, Equation (6) can be simplified as Equation (7) below.

$$DesSig_m(i,\Delta) \cong \sqrt{M}(SF \cdot a_m(i) \cdot jS_c(i)G(\Delta)\beta_c) + ICI_m(i,\Delta) + n_{m.i}(i,\Delta) \quad \text{--- (7)}$$

In Equation (7), according to a central limit theorem, the functions $n_{m,t}(i,\Delta)$ and $ICI_m(i,\Delta)$ denote Gaussian distributions having an average of 0 and are independent from each other. Thus, an average energy obtained using Equation (7) can be expressed by Equation (8) below.

$$E\{DesEng_m(i,\Delta)\} = E\{|DesSig_m(i,\Delta)|^2\}$$
$$= M(SF \cdot A_m(i) \cdot S_c(i)G(\Delta)\beta_c)^2 + E\{|ICI_m(i,\Delta)|^2\} + E\{|n_{m.i}(i,\Delta)|^2\} \quad \text{--- (8)}$$

In Equation (8), $E\{|ICI_m(i,\Delta)|^2\}$ has a different average value according to $\Delta$.
An early energy and a late energy can be obtained using Equation (8), and can be expressed by Equation (9) and Equation (10).

$$E\{EarlyEng_m(i)\} = E\{DesEng_m(i, p_m - \Delta t)\}$$
$$= M(SF \cdot A_m(i) \cdot S_c(i)G(p_m - \Delta t)\beta_c)^2 + E\{|ICI_m(i, p_m - \Delta t)|^2\} + E\{|n_{m.t}(i, p_m - \Delta t)|^2\}$$
$$\text{--- (9)}$$

$$E\{LateEng_m(i)\} = E\{DesEng_m(i, p_m + \Delta t)\}$$
$$= M(SF \cdot A_m(i) \cdot S_c(i)G(p_m + \Delta t)\beta_c)^2 + E\{|ICI_m(i, p_m + \Delta t)|^2\} + E\{|n_{m.i}(i, p_m + \Delta t)|^2\}$$
$$\text{--- (10)}$$

In Equation (9), " $p_m$ denotes a relative position of the on-time energy in an actual path. In general, $\Delta t$ is Tc/2. In Equation (9) and Equation (10), $E\{|n_{m.t}(i,p_m-\Delta t)|^2\}$ and $E\{|n_{m.t}(i,p_m+\Delta t)|^2\}$ have the same value on an average and thus they are cancelled out in the process of obtaining the difference between the early energy and the late energy. However, since $E\{|ICI_m(i,\Delta)|^2\}$ differs depending on $\Delta$, an influence of ICI can be eliminated when it is removed before obtaining the difference between the early energy and the late energy. The influence of ICI increases when the control channel has a significantly small energy in comparison with the data channel. Therefore, when the data channel has a significantly large energy in comparison with the control channel, it is necessary to remove the ICI. For this, noise energy is estimated at a position where the early energy is equal to the late energy, and the estimated value is removed from each of the energy.
A noise estimation method using an unused Orthogonal Variable Spreading Factor (OVSF) may be used to estimate $E\{|ICI_m(i,\Delta)|^2\}$. In this case, a first term of Equation (6) is removed according to an orthogonal characteristic of the channelization code. Then, only the ICI and the noise remain as expressed by Equation (11) below.

$$DesSig_{u,m}(i,\Delta) =$$

$$\sqrt{M} \sum_{n=0}^{SF-1} \{a_m((n+i\cdot SF)T_c + \tau_m + \Delta) \sum_{k \neq n+i\cdot SF} d_k G((n+i\cdot SF)T_c + \Delta - kT_c))\} s_{n+i\cdot SF}^* c_{u,n}\}$$

$$+ \sum_{n=0}^{SF-1} \{n_{m,r}((n+i\cdot SF)T_c + \tau_m + \Delta)s_{n+i\cdot SF}^* c_{u,n}\}$$

$$= ICI_{u,m}(i,\Delta) + n_{u.m}(i,\Delta)$$

$$--- (11)$$

An average energy may be obtained by using Equation (11). Then, energies of the ICI and the noise may be obtained according to Equation (12) below.

$$E\{ICIEst_m(i,\Delta)\} = E\{|DesSig_{u,m}(i,\Delta)|^2\} = E\{|ICI_{u,m}(i,\Delta)|^2\} + E\{|n_{u,m}(i,\Delta)|^2\} \quad --- (12)$$

In Equation (12), $E\{|ICI_{u,m}(i,\Delta)|^2$ has the same average value as $E\{|ICI_m(i,\Delta)|^2\}$. In addition, $E\{|n_{u,m}(i,\Delta)|^2\}$ has the same average value as $E\{|n_{m,t}(i,\Delta)|^2\}$.

In general, an energy used for tracking is obtained by adding N samples in a non-coherent manner. Thus, Equation (9), Equation (10), and Equation (12) can be expressed by Equation (13) to Equation (16) below.

$$NEarlyEng_m = \frac{c}{N} \sum_{i=0}^{N-1} EarlyEng_m(i) \cong cE\{EarlyEng_m(i)\} \qquad --- (13)$$

$$NLateEng_m = \frac{c}{N} \sum_{i=0}^{N-1} LateEng_m(i) \cong cE\{LateEng_m(i)\} \qquad --- (14)$$

$$NEarlyICIEst_m = \frac{c}{N} \sum_{i=0}^{N-1} ICIEst_m(i, p_m - \Delta t) \cong cE\{ICIEst_m(i, p_m - \Delta t)\} \qquad --- (15)$$

$$NLateICIEst_m = \frac{c}{N} \sum_{i=0}^{N-1} ICIEst_m(i, p_m + \Delta t) \cong cE\{ICIEst_m(i, p_m + \Delta t)\} \qquad --- (16)$$

Throughout Equation (13) to Equation (16), the symbol c denotes a constant value. An early energy and a last energy can be obtained by removing the ICI according to Equation (13) to Equation (16). The obtained early energy can be expressed by Equation (17) below. The obtained late energy can be expressed by Equation (18) below.

$$NREarlyEng_m = NEarlyEng_m - NEarlyICIEst_m \qquad --- (17)$$

$$NRLateEng_m = NLateEng_m - NLateICIEst_m \qquad --- (18)$$

According to an exemplary embodiment of the present invention, tracking is performed using a difference between the early energy and the late energy, respectively obtained using Equation (17) and Equation (18).

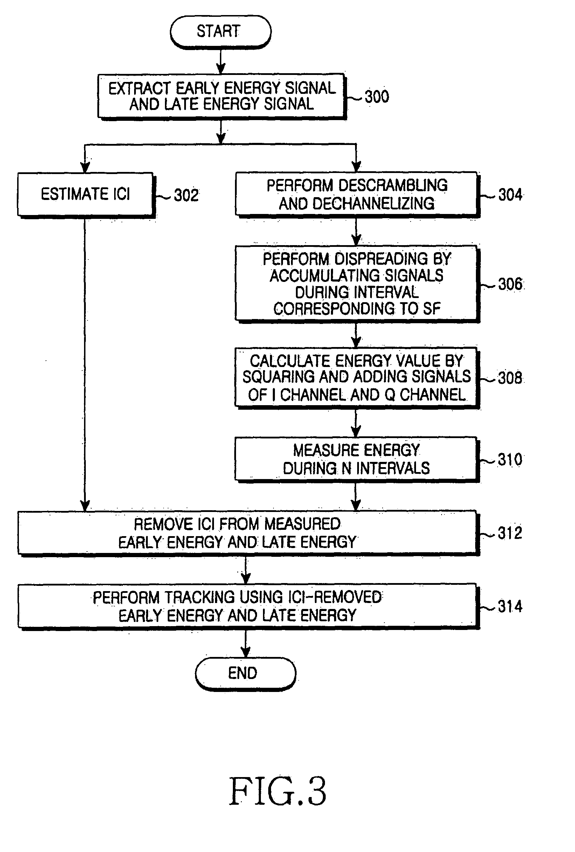

Hereinafter, a tracking method in which ICI is removed when tracking is performed in the mobile terminal constructed as described above according to an exemplary embodiment of the present invention will be described with reference to FIG. 3.

FIG. 3 is a flowchart illustrating a tracking process in which ICI is removed by a tracking apparatus of a mobile terminal according to an exemplary embodiment of the present invention.

Referring to FIG. 3, in step 300, the tracking apparatus extracts an early energy signal and a late energy signal from a received signal. In step 302, the tracking apparatus estimates respective ICI components from the early energy signal and the late energy signal.

In step 304, the tracking apparatus descrambles and dechannelizes each of the early energy signal and the late energy signal. In step 306, the tracking apparatus performs despreading by accumulating each of the dechannelized early energy signal and late energy signal during an interval corresponding to a Spreading Factor (SF). In step 308, the tracking apparatus calculates respective energies by squaring and then adding I channel and Q channel signals with respect to the despread early energy signal and late energy signal. In step 310, the tracking apparatus estimates an early energy and a late energy during N intervals, where N is a preset value.

In step 312, the tracking apparatus removes interference by subtracting the respective ICI components estimated in step 302 from the early energy and late energy measured in step 310. In step 314, the tracking apparatus performs tracking by using the ICI-removed early energy and late energy.

According to exemplary embodiments of the present invention, a tracking apparatus and method in a mobile terminal are provided. The method includes extracting an on-time energy signal, an early energy signal, and a late energy signal from a received signal, estimating respective ICI components from the early energy signal and the late energy signal, measuring an early energy and a late energy by using the early energy signal and the late energy signal, and removing ICI by subtracting the estimated ICI components respective from the measured early energy and late energy. Therefore, there is an advantage in that a tracking error having an effect on ICI may be reduced when providing a service of which a control channel has a higher energy than a data channel.

While the present invention has been shown and described with reference to certain exemplary embodiments thereof, it will be understood by those skilled in the art that various changes in form and details may be made therein without departing from the spirit and scope of the present invention as defined by the appended claims and their equivalents. Therefore, the scope of the invention is defined not by the detailed description of the invention but by the appended claims and their equivalents, and all differences within the scope will be construed as being included in the present invention.

## Claims

1. A tracking apparatus in a mobile terminal, the apparatus comprising:

   a signal extractor for extracting an on-time energy signal, an early energy signal, and a late energy signal from a received signal;
   a first Inter-Chip Interference (ICI) estimator for estimating an early energy ICI component from the early energy signal;
   a second ICI estimator for estimating a late energy ICI component from the late energy signal;
   an early energy measurer for measuring an early energy by using the early energy signal;
   a late energy measurer for measuring a late energy by using the late energy signal;
   a first ICI remover for removing ICI by subtracting the estimated early energy ICI component from the early energy measured by the early energy measurer; and
   a second ICI remover for removing ICI by subtracting the estimated late energy ICI component from the late energy measured by the late energy measurer.

2. The apparatus of claim 1, wherein the early energy measurer comprises:

   a descrambler for descrambling the early energy signal to convert the signal into an unscrambled signal;
   a dechannelizer for unchannelizing the descrambled early energy signal into an unchannelized signal;
   a despreader for despreading the dechannelized early energy signal to convert the signal into an unspead signal;
   an energy calculator for calculating a power level of the despread early energy signal; and
   an interval energy calculator for calculating the early energy during a specific interval.

3. The apparatus of claim 2, wherein the despreader despreads the dechannelized early energy signal by accumulating the dechannelized early energy signal during an interval corresponding to a Spreading Factor (SF).

4. The apparatus of claim 2, wherein the energy calculator calculates a power level of the despread early energy signal by squaring and then adding I channel and Q channel signals of the despread early energy signal.

5. The apparatus of claim 1, wherein the late energy measurer comprises:

a descrambler for descrambling the late energy signal to convert the signal into an unscrambled signal;
a dechannelizer for unchannelizing the descrambled late energy signal into an unchannelized signal;
a despreader for despreading the dechannelized late energy signal to convert the signal into an unspead signal;
an energy calculator for calculating a power level of the despread late energy signal; and
an interval energy calculator for calculating the late energy during a specific interval.

6. The apparatus of claim 5, wherein the despreader despreads the dechannelized late energy signal by accumulating the dechannelized late energy signal during an interval corresponding to a Spreading Factor (SF).

7. The apparatus of claim 5, wherein the energy calculator calculates a power level of the despread late energy signal by squaring and then adding I channel and Q channel signals of the despread late energy signal.

8. The apparatus of claim 1, further comprising an adder for obtaining a difference between the ICI-removed early energy and late energy which are respectively obtained by the first ICI remover and the second ICI remover.

9. A tracking method in a mobile terminal, the method comprising:

extracting an on-time energy signal, an early energy signal, and a late energy signal from a received signal;
estimating respective ICI components from the early energy signal and the late energy signal;
measuring an early energy and a late energy using the early energy signal and the late energy signal; and
removing ICI by subtracting the estimated respective ICI components from the measured early energy and late energy.

10. The method of claim 9, wherein the measuring of the early energy comprises:

descrambling the early energy signal to convert the signal into an unscrambled signal;
unchannelizing the descrambled early energy signal into an unchannelized signal;
despreading the dechannelized early energy signal to convert the signal into an unspead signal;
calculating a power level of the despread early energy signal; and
calculating the early energy during a specific interval.

11. The method of claim 10, wherein the despreading of the dechannelized early energy signal comprises accumulating the dechannelized early energy signal during an interval corresponding to a Spreading Factor (SF).

12. The method of claim 10, wherein the calculating of the power level of the despread early energy signal comprises squaring and then adding I channel and Q channel signals of the despread early energy signal.

13. The method of claim 9, wherein the measuring of the late energy comprises:

descrambling the late energy signal to convert the signal into an unscrambled signal;
unchannelizing the descrambled late energy signal into an unchannelized signal;
despreading the dechannelized late energy signal to convert the signal into an unspead signal;
calculating a power level of the despread late energy signal; and
calculating the late energy during a specific interval.

14. The method of claim 13, wherein the despreading of the dechannelized late energy signal comprises accumulating the dechannelized late energy signal during an interval corresponding to a Spreading Factor (SF) and wherein the calculating of the power level of the despread late energy signal comprises squaring and then adding I channel and Q channel signals of the despread late energy signal.

15. The method of claim 9, further comprising obtaining a difference between the ICI-removed early energy and the ICI-removed late energy.

FIG.1
(CONVENTIONAL ART)

EP 2 040 387 A1

FIG.2

EP 2 040 387 A1

START

EXTRACT EARLY ENERGY SIGNAL
AND LATE ENERGY SIGNAL ~300

ESTIMATE ICI ~302

PERFORM DESCRAMBLING
AND DECHANNELIZING ~304

PERFORM DISPREADING BY
ACCUMULATING SIGNALS
DURING INTERVAL
CORRESPONDING TO SF ~306

CALCULATE ENERGY VALUE BY
SQUARING AND ADDING SIGNALS
OF I CHANNEL AND Q CHANNEL ~308

MEASURE ENERGY
DURING N INTERVALS ~310

REMOVE ICI FROM MEASURED
EARLY ENERGY AND LATE ENERGY ~312

PERFORM TRACKING USING ICI-REMOVED
EARLY ENERGY AND LATE ENERGY ~314

END

# FIG.3

EP 2 040 387 A1

**EUROPEAN SEARCH REPORT**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/206665 A1 (HWANG SANG-YUN [KR]) 6 September 2007 (2007-09-06) * paragraphs [0005] - [0015], [0037] - [0053]; figure 2 * ----- | 1-15 | INV. H04B1/707 |
| X | WO 2006/019271 A (SAMSUNG ELECTRONICS CO LTD [KR]) 23 February 2006 (2006-02-23) * page 3, line 23 - page 4, line 20 * * page 6, line 1 - page 19, line 5; figures 3,4 * ----- | 1-15 | |
| A | SOUROUR E ET AL: "Delay tracking for direct sequence spread spectrum systems in multipath fading channels" VEHICULAR TECHNOLOGY CONFERENCE, 1999 IEEE 49TH HOUSTON, TX, USA 16-20 MAY 1999, PISCATAWAY, NJ, USA,IEEE, US, vol. 1, 16 May 1999 (1999-05-16), pages 422-426, XP010341907 ISBN: 978-0-7803-5565-1 section III.C; figure 3. ----- | 1-15 | |

**TECHNICAL FIELDS SEARCHED (IPC)**

H04B

The present search report has been drawn up for all claims

| Place of search | Date of completion of the search | Examiner |
|---|---|---|
| The Hague | 7 January 2009 | Nilsson, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT**
**ON EUROPEAN PATENT APPLICATION NO.**

EP 08 01 6567

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2009

| Patent document cited in search report | Publication date | Patent family member(s) | Publication date |
|---|---|---|---|
| US 2007206665 A1 | 06-09-2007 | KR 20070079277 A | 06-08-2007 |
| WO 2006019271 A | 23-02-2006 | EP 1779532 A1<br>KR 20060016702 A<br>US 2006039452 A1 | 02-05-2007<br>22-02-2006<br>23-02-2006 |

EPO FORM P0459